# EUROPEAN PATENT APPLICATION

(11) **EP 4 768 645 A1**
(43) Date of publication of application: **01.07.2026**
(21) Application number: 24908292.6
(22) Date of filing: 16.12.2024
(51) Int. Cl.: C25D 3/38, C25D 5/36, C23G 1/08, C22C 38/42, C22C 38/44, C22C 38/38, C22C 38/02, C22C 38/06

(54) **COPPER PLATED AUSTENITIC STAINLESS STEEL COIL**

(30) Priority: 18.12.2023 KR 20230184429
(71) Applicant: POSCO Co., Ltd, Gyeongsangbuk-do 37859 (KR)
(72) Inventor: KANG, Hyunggu, Pohang-si Gyeongsangbuk-do 37836 (KR); RYU, Hanjin, Gimhae-si Gyeongsangnam-do 50999 (KR); KIM, Jinsuk, Pohang-si Gyeongsangbuk-do 37671 (KR)
(74) Representative: Nederlandsch Octrooibureau
(86) International application number: PCT/KR2024/097030
(87) International publication number: WO 2025/136010

(57) **Abstract**

According to the present disclosure, a copper-plated austenitic stainless steel coil can be provided, the coil comprising: an austenitic stainless steel coil base material; and a copper plating layer provided on an outer surface of the base material, wherein an average thickness of the copper plating layer is from 1 µm to 100µm, and a ratio of the average thickness of the copper plating layer to an average thickness of the base material is 0.2 or less.

## Description

### [Technical Field]

The present disclosure relates to a copper-plated austenitic stainless steel coil.

### [Background Art]

Copper plating on a stainless steel surface enables brazing joining applications through the utilization of a lower melting point compared to stainless steel. However, finding examples of plating on the surface of stainless steel coils is difficult.

Meanwhile, from a plating perspective, there are examples of nickel plating for improving surface conductivity and aluminum plating for improving salt water corrosion resistance. However, copper plating on a stainless steel coil is difficult to find.

Additionally, while a method of cladding copper exists for the purpose of improving the conductivity of the stainless steel surface, instances of applying copper to the stainless steel coil surface through a plating method are also difficult to find.

In stainless steel, a passive film is generally formed, which imparts corrosion resistance. The said passive film mainly comprises compounds of chromium and oxygen, and is uniformly and densely distributed on the surface. This causes poor adhesion upon attempting copper plating. Furthermore, even subsequent to successful copper plating, the copper plating layer is prone to peeling during the forming of copper-plated stainless steel products. The present disclosure seeks to resolve the copper plating problems attributable to the passive film of the stainless steel coil.

### [Disclosure]

### [Technical Problem]

A method for manufacturing a copper-plated stainless steel coil is provided.

### [Technical Solution]

In an embodiment of the present disclosure, a copper-plated austenitic stainless steel coil comprises: an austenitic stainless steel coil base material; and a copper plating layer disposed on an outer surface of the base material, wherein an average thickness of the copper plating layer is from 1 µm to 100µm, and wherein a ratio of the average thickness of the copper plating layer to an average thickness of the base material is 0.2 or less, wherein the base material satisfies a film index of 1.2 or less as defined by the following Formula (1): (Si+2Al)/Mn.

The copper-plated austenitic stainless steel coil of claim 1, wherein the austenitic stainless steel coil base material satisfies a film index of 1.2 or less, the film index being represented by (Si+2Al)/Mn, (where Si, Al, and Mn represent contents of respective elements.)

In an embodiment of the present disclosure, the austenitic stainless steel coil base material may have a composition comprising, in percentage by weight: C: 0.005% to 0.080%, Si: 0.1% to 1.0%, Mn: 0.1% to 1.5%, Cu: 0.05% to 0.5%, Ni: 8% to 13%, Cr: 16% to 20%, Mo: 0.05% to 2.5%, and Al: 0.001% to 0.2%.

In an embodiment of the present disclosure, in a 100 × 100 mm² area of a surface, an area ratio of the copper plating layer may be 95% or more.

In an embodiment of the present disclosure, the copper plating layer may comprise 75 wt% or more of copper.

A method for manufacturing a copper-plated austenitic stainless steel coil, according to another embodiment of the present disclosure comprises: providing an austenitic stainless steel coil base material; and electroplating copper by immersing the base material in a solution comprising 10 g/L to 500 g/L of CuSO₄·5H₂O, 10 g/L to 500 g/L of H₂SO₄, and a balance of water, and applying a current density from 1 A/dm² to 50 A/dm² for 1 to 150 seconds.

In an embodiment of the present disclosure, in the method for manufacturing a copper-plated austenitic stainless steel coil, the austenitic stainless steel coil base material may satisfy a film index of 1.2 or less, the film index being represented by (Si+2Al)/Mn (where Si, Al, and Mn represent contents of respective elements).

In an embodiment of the present disclosure, in the method for manufacturing a copper-plated austenitic stainless steel coil, the austenitic stainless steel coil base material may have a composition comprising, in percentage by weight: C: 0.005% to 0.080%, Si: 0.1% to 1.0%, Mn: 0.1% to 1.5%, Cu: 0.05% to 0.5%, Ni: 8% to 13%, Cr: 16% to 20%, Mo: 0.05% to 2.5%, and Al: 0.001% to 0.2%.

In an embodiment of the present disclosure, in the method for manufacturing a copper-plated austenitic stainless steel coil, the method may further comprise, prior to electroplating copper, immersing the base material for 1 to 120 seconds in: (a) a sulfuric acid solution at a concentration of 5 g/L to 200 g/L; or (b) a mixed acid solution comprising 5 g/L to 200 g/L of nitric acid and 1 g/L to 20 g/L of hydrofluoric acid.

### [Advantageous Effects]

As presented in the present disclosure, the copper-plated austenitic stainless steel exhibits excellent brazing properties and excellent resistance to peeling of the copper plating layer upon forming.

### [Description of Drawings]

FIG. 1 is a cross-sectional view of a copper-plated austenitic stainless steel coil including a stainless steel coil base material and a copper plating layer.
FIG. 2 is a photograph showing appearance characteristics of Example 1.

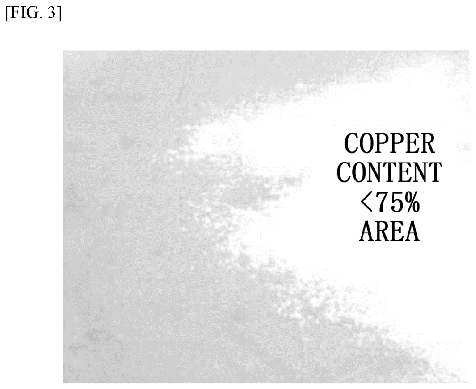

FIG. 3 is a photograph showing appearance characteristics of comparative example 1.

### [Modes of the Invention]

Hereinafter, preferred embodiments of the present disclosure are described. However, embodiments of the present disclosure are capable of various other modifications, and the technical spirit of the present disclosure is not limited to the embodiments described hereinafter. Further, the embodiments of the present disclosure are provided for a more complete description of the present disclosure to those of ordinary skill in the art.

Terms used in the present disclosure are used only for describing specific examples. Thus, for example, singular expressions include plural expressions, unless the context expressly dictates a singular meaning. Additionally, terms such as "comprise" or "include" used in the present disclosure are used to clearly denote the presence of features, steps, functions, components, or combinations thereof described in the disclosure, and it should be noted that they are not used to preliminarily exclude the presence of other features, steps, functions, components, or combinations thereof.

The understanding of all terms employed herein is to be consistent with meanings generally understood by those of ordinary skill in the art to which the present disclosure pertains, absent other definitions. Accordingly, a specific term's interpretation shall not be in an excessively idealized or formal meaning, absent clear definitions herein.

Additionally, the terms "approximately," "substantially," and the like, in the present disclosure, are utilized to mean at or proximate to a stated numerical value, accounting for manufacturing and material tolerances inherent to the stated meaning. The terms' usage further prevents undue utilization by an unconscionable infringer of disclosure content mentioning precise or absolute numerical values, such prevention aiding understanding of the present invention.

In the present disclosure, the percentage representation of each element's content is in wt%, without specific statements to the contrary.

First, a description is provided for the copper-plated austenitic stainless steel coil according to the present disclosure.

A copper-plated austenitic stainless steel coil according to an example of the present disclosure comprises: an austenitic stainless steel coil base material; and a copper plating layer disposed on an outer surface of the base material, wherein an average thickness of the copper plating layer is 1 µm to 100µm, and wherein a ratio of the average thickness of the copper plating layer to an average thickness of the base material is 0.2 or less.

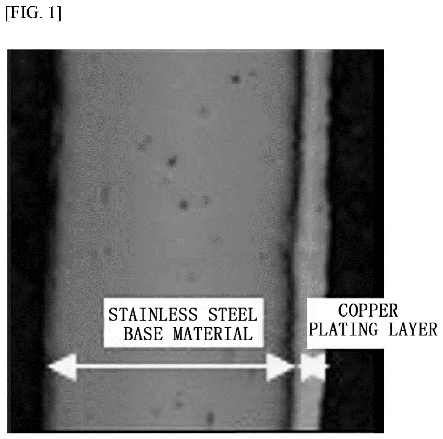

FIG. 1 is a cross-sectional view of a copper-plated austenitic stainless steel coil, including an austenitic stainless steel coil base material and a copper plating layer according to an example of the present disclosure.

The austenitic stainless steel coil base material of the present disclosure satisfies a film index of 1.2 or less, the film index being represented by (Si+2Al)/Mn, where Si, Al, and Mn represent contents of respective elements, maintaining an austenitic stainless steel microstructure, and is not limited to a specific compositional range. For example, an example composition of the austenitic stainless steel coil base material comprises, in percentage by weight: C: 0.005% to 0.080%, Si: 0.1% to 1.0%, Mn: 0.1% to 1.5%, Cu: 0.05% to 0.5%, Ni: 8% to 13%, Cr: 16% to 20%, Mo: 0.05% to 2.5%, and Al: 0.001% to 0.2%, The compositionand is not limited thereto.

A film index greater than 1.2 leads to a strengthening of Si oxides or Al oxides within the passive film, bringing about an effect of further strengthening the characteristics of the passive film. This, conversely, results in reduced adhesion. Mn, conversely, hinders passive film formation, thus acting contrary to Si or Al. The film index is controlled to be 1.2 or less, preferably 1 or less, and more preferably 0.7 or less.

Further, a method for improving stainless steel surface conductivity involves copper plating. Controlling a thickness of the copper plating layer from 1 µm to 100 µm is significantly easier than bonding copper by cladding. A process for forming a thin copper layer by cladding incurs significant cost. The copper layers produced by cladding are primarily manufactured with a thickness of 100 µm or more, facilitating delamination after forming.

Accordingly, the average thickness of the copper plating layer of the present disclosure may be 1µm to 100µm, a ratio of an average thickness of the copper plating layer to an average thickness of the base material may be 0.2 or less, wherein the base material satisfies a film index of 1.2 or less as defined by the following Formula (1): (Si+2Al)/Mn. Copper plating may be performed on one or both surfaces of the austenitic stainless steel coil base material. To prevent copper delamination during forming after plating, the average thickness of the copper plating layer may be from 1µm to 100µm, preferably 75µm or less, and more preferably 60 µm or less. In situations where the copper plating layer is located on an inner or outer surface of a bent portion during forming, delamination occurs due to a significant difference in formability (i.e., elongation) between the stainless steel and the copper plating layer. Accordingly, thickness control of the copper plating layer and the base material coil is necessary, and control of the ratio of the thickness of the copper plating layer to the thickness of the stainless steel to 0.2 or less is necessary. Preferably, the ratio may be 0.1 or less, and more preferably 0.05 or less.

Furthermore, in an example of the present disclosure, an area ratio of the copper plating layer is 95% or more in a 100x100 mm² area of a surface of the copper-plated austenitic stainless steel coil.

A copper plating layer area ratio less than 95% results in the failure of copper to adequately perform its role in unplated portions. Such a condition creates a problem of insufficient joining in the unplated portions contacting a joining material during brazing. The area ratio of the copper plating layer is preferably 99% or more.

Further, the copper-plated austenitic stainless steel coil according to an example of the present disclosure comprises the copper plating layer comprising 75% or more of copper in percentage by weight.

The copper content means the average content of copper measured by 5-point spot analysis in a central layer in a thickness direction of the copper plating layer. A copper content less than 75% indicates insufficient copper plating, which may result in a partial measurement of components of the base material. Such a condition presents a problem of the copper plating layer delaminating during forming. The copper content of the copper plating layer is preferably 85% or more, and more preferably 95% or more.

Copper plating falling short of the aforementioned area ratio or content fails to present a uniform copper color on the surface, thereby impairing the aesthetic appearance and leading to a user's determination of improperly formed copper plating upon visual inspection.

Next, a method for manufacturing the copper-plated austenitic stainless steel coil is described.

A method for manufacturing a copper-plated austenitic stainless steel coil according to an example of the present disclosure comprises: providing an austenitic stainless steel coil base material; and performing copper electroplating by immersing the austenitic stainless steel coil base material in a solution comprising 10 g/L to 500 g/L of CuSO₄·5H₂O, 10 g/L to 500 g/L of H₂SO₄, and a balance of water, and applying a current density of 1 A/dm² to 50 A/dm² for 1 to 150 seconds.

Copper plating can be performed by various methods, but electroplating is preferred. This is because it is advantageous for production in coil units in conjunction with the aforementioned acid treatment or a nickel layer. Electroplating may be performed by using the stainless steel as a cathode and an insoluble electrode as an anode, and applying a current density of 1 A/dm² to 50 A/dm², in a solution comprising 10 g/L to 500 g/L of CuSO₄·5H₂O, 10 g/L to 500 g/L of H₂SO₄, and a balance of water. This method provides optimal conditions for the copper to adhere closely to the stainless steel without peeling, and concurrently, it is a factor governing the thickness of the copper plating layer. On the other hand, a low solution concentration or a low current density causes the copper to not adhere uniformly, resulting in the occurrence of insufficient areas. This becomes a factor for a reduction in the area ratio of the plating layer or for a low measurement of the copper content within the plating layer. An excessively high solution concentration or a high current density causes a problem where the copper layer plated on the stainless steel is easily decomposed. Therefore, control is performed within the specified range.

A method for manufacturing a copper-plated austenitic stainless steel coil of an example of the present disclosure further comprises, before performing copper electroplating, immersing the austenitic stainless steel coil base material in sulfuric acid at a concentration of 5 g/L to 200 g/L, or in a mixed acid of nitric acid and hydrofluoric acid at a concentration of 1 g/L to 20 g/L, for 1 to 120 seconds. In performing copper electroplating, removing the passive film on the surface of the stainless steel base material is necessary to prevent peeling during forming. The passive film on the surface of the stainless steel base material increases corrosion resistance while inhibiting adhesion to copper. Immersion of the stainless steel base material in sulfuric acid or a mixed acid of nitric acid and hydrofluoric acid for 1 to 120 seconds before copper electroplating achieves improvement in this condition. To maximize the reactivity between the passive film and the acid, the sulfuric acid concentration is 5 g/L to 200 g/L. For the mixed acid of nitric acid and hydrofluoric acid, the nitric acid concentration is 5 g/L to 200 g/L and the hydrofluoric acid concentration is 1 g/L to 20 g/L, respectively. Production in coil units defines the holding time as the time for 1 m of coil to remain immersed in the acid along the coil's longitudinal direction, and 1 second to 120 seconds is preferable.

Hereinafter, the present disclosure is described in further detail through examples.

### (example)

In the present disclosure, as an example of representative components in wt%, based on 0.02% C, 0.7% Si, 1.0% Mn, 0.3% Cu, 10% Ni, 16.1% Cr, 2.1% Mo, and 0.01% Al, the austenitic stainless steel coil base materials of the examples and comparative examples, having the compositions and film indices of Table 1 below, were prepared in the thickness ranges of Table 2 below. The said coils were immersed in a bath containing 50 g/L of sulfuric acid for 30 seconds in a continuous line, and after water washing, immediately immersed in a copper plating bath of 100 g/L of Copper sulfate pentahydrate and 100 g/L of Sulfuric acid. A current density of 15 A/dm² was applied to form a copper plating layer having the thicknesses of Table 2 below, and the ratio of the average thickness of the said copper plating layer to the said austenitic stainless steel coil base material was represented.

The composition of the stainless steel in Table 1 below was measured using equipment commonly used in academia and industry, such as Inductively Coupled Plasma or a spectroscope. The composition of the plating layer can be measured using energy dispersive spectroscopy attached to a scanning electron microscope or a transmission electron microscope, due to its relatively thin thickness compared to the stainless steel base material. However, during measurement by energy dispersive spectroscopy, carbon and oxygen can affect the component content due to contamination of the sample and are thus excluded from the final result; elements coated for sample observation are also excluded. The copper and nickel plating layers were calculated as an average by extracting five random spots from the central layer in the thickness direction.

The determination of peeling after forming uses various methods, such as tensioning, Erichsen forming, and cupping. In the present disclosure, 15% uniaxial tension was used as an example. Thereafter, peeling between the stainless steel base material and the copper plating layer was observed. Peeling is a commonly understood concept and is determinable by visual inspection; however, for convenience, it is understood that the copper plating layer having a 10x10 mm² area separates from the stainless steel base material by a distance of 1 mm or more.

Appearance Evaluation Method Although it is difficult to quantitatively measure aesthetic appearance, in the present disclosure a level determined to be within a normally acceptable range is designated as "pass", as shown in Table 1 below.

On the surface, the area ratio of the copper plating layer is measured in a 100x100 mm² area. The surface refers to a surface of the material observed from a direction perpendicular to the material surface. The position of the surface is a center in a width direction of the material. In the longitudinal direction, for a coil, measurement can occur at a position discarding 1m from an end of the coil; however, in the case of numerous scratches, 1 to 10m can be discarded. The area ratio allows for image analysis after photographing with a conventional digital camera. The copper plating layer exhibits an orange color when photographed with a digital camera on the surface, and the base material primarily exhibits an achromatic color between white and gray; therefore, a separation of groups by the two colors allows for calculating the area ratio of the plating layer. In a case of difficulty in separating the two groups, a separation of the two groups by color separation as described above is possible, by using an objective lens of 5x or 10x magnification in an optical microscope after equally dividing a 100x100 mm² area into 100 areas and photographing the divided areas.

The thickness measurement method for the STS, the copper plating layer, and the nickel plating layer involves mirror surface polishing a cross-section and subsequently observing the cross-section with an optical microscope or a scanning electron microscope for measurement. The method for measuring length with the optical microscope or the scanning electron microscope can follow conventional practice.

**[Table 1]**

| Classification | Si Content (wt. %) | Al Content (wt. %) | Mn Content (wt. %) | Film Index |
|---|---|---|---|---|
| Inventive Example 1 | 0.60 | 0.112 | 1.10 | 0.75 |
| Inventive Example 2 | 0.70 | 0.012 | 1.05 | 0.69 |
| Inventive Example 3 | 0.88 | 0.003 | 1.15 | 0.77 |
| Inventive Example 4 | 0.35 | 0.005 | 1.25 | 0.29 |
| Inventive Example 5 | 0.66 | 0.140 | 0.81 | 1.16 |
| Inventive Example 6 | 0.12 | 0.006 | 1.45 | 0.09 |
| Comparative Example 1 | 1.22 | 0.005 | 0.89 | **1.38** |
| Comparative Example 2 | 1.32 | 0.010 | 0.92 | **1.46** |
| Comparative Example 3 | 0.65 | 0.160 | 0.76 | **1.28** |
| Comparative Example 4 | 0.77 | 0.110 | 0.58 | **1.71** |
| Comparative Example 5 | 0.75 | 0.009 | 0.61 | **1.26** |

**[Table 2]**

| Classification | Copper Area Ratio (%) | Copper Content (wt. %) | Appearance | STS Thickness (mm) | Copper Plating Thickness (mm) | Thickness Ratio | Peeling After Forming |
|---|---|---|---|---|---|---|---|
| Inv. Ex.1 | 100 | 95 | Pass | 0.61 | 0.015 | 0.02 | Good |
| Inv. Ex.2 | 100 | 76 | Pass | 0.75 | 0.005 | 0.01 | Good |
| Inv. Ex.3 | 100 | 98 | Pass | 0.38 | 0.074 | 0.19 | Good |
| Inv. Ex.4 | 100 | 98 | Pass | 0.65 | 0.089 | 0.14 | Good |
| Inv. Ex.5 | 100 | 77 | Pass | 0.99 | 0.095 | 0.10 | Good |
| Inv. Ex.6 | 100 | 99 | Pass | 1.21 | 0.050 | 0.04 | Good |
| Inv. Ex.7 | 95 | 95 | Pass | 0.62 | 0.055 | 0.09 | Good |
| Inv. Ex.8 | 91 | 88 | Pass | 0.65 | 0.060 | 0.09 | Good |
| Comp. Ex.1 | 85 | 95 | Fail | 0.55 | 0.088 | 0.16 | Good |
| Comp. Ex.2 | 88 | 99 | Fail | 0.77 | 0.066 | 0.09 | Good |
| Comp. Ex.3 | 94 | 55 | Fail | 0.65 | 0.022 | 0.03 | Good |
| Comp. Ex.4 | 93 | 44 | Fail | 0.71 | 0.015 | 0.02 | Good |
| Comp. Ex.5 | 60 | 80 | Fail | 0.62 | 0.180 | 0.29 | Peeling |
| Comp. Ex.6 | 100 | 95 | Pass | 0.61 | 0.150 | 0.25 | Peeling |
| Comp. Ex.7 | 100 | 94 | Pass | 0.41 | 0.088 | 0.21 | Peeling |
| Comp. Ex.8 | 100 | 99 | Pass | 0.74 | 0.211 | 0.29 | Peeling |
| Comp. Ex.9 | 100 | 91 | Pass | 0.95 | 0.250 | 0.26 | Peeling |
| Comp. Ex.10 | 100 | 99 | Pass | 0.55 | 0.122 | 0.22 | Peeling |

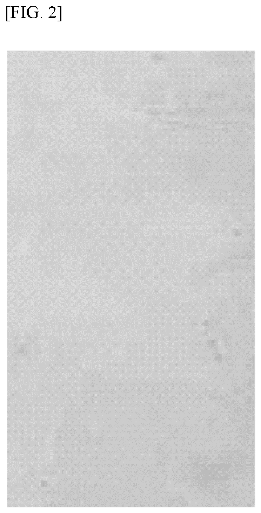

Invention Examples 1 to 8 of Table 1 satisfy a film index (Si+2Al)/Mn based on Si content, Al content, and Mn content of 1.2 or less, as presented in the present disclosure. Invention Examples 1 to 8 show an area ratio of the copper plating layer of 95% or more as shown in Table 2, and the copper content in the copper plating layer satisfies 75% or more, and appearance evaluation results indicated 'pass' as shown in FIG. 1. Meanwhile, Comparative Examples 1 to 5 demonstrated a film index exceeding 1.2, and as shown in FIG. 2, the copper area ratio failed to reach 95%, the copper content of the plating layer failed to reach 75%, and appearance evaluation results indicated 'fail'. Meanwhile, Invention Examples 1 to 8 satisfied a thickness ratio of the stainless steel to the copper plating layer within the range of the present disclosure, i.e., 0.2 or less, and simultaneously exhibited good delamination resistance. In contrast, Comparative Examples 6 to 10 satisfied the film index but did not satisfy the thickness ratio, resulting in delamination.

In the foregoing, while exemplary embodiments of the present disclosure have been described, the present disclosure is not limited thereto, and a person having ordinary skill in the art will understand that various changes and modifications are possible without departing from the spirit and scope of the claims described below.

## Claims

1. A copper-plated austenitic stainless steel coil comprising:
an austenitic stainless steel coil base material; and
a copper plating layer provided on an outer surface of the base material,
wherein an average thickness of the copper plating layer is from 1 µm to 100 µm, and
wherein a ratio of the average thickness of the copper plating layer to an average thickness of the base material is 0.2 or less.

2. The copper-plated austenitic stainless steel coil of claim 1,
wherein the austenitic stainless steel coil base material satisfies a film index of 1.2 or less as, defined by the following Formula (1). Formula (1): (Si+2Al)/Mn
(wherein Si, Al, and Mn represent a content in weight percent of each respective element.)

3. The copper-plated austenitic stainless steel coil of claim 1, wherein a composition of the austenitic stainless steel coil base material comprises, in percentage by weight: C: 0.005% to 0.080%, Si: 0.1% to 1.0%, Mn: 0.1% to 1.5%, Cu: 0.05% to 0.5%, Ni: 8% to 13%, Cr: 16% to 20%, Mo: 0.05% to 2.5%, and Al: 0.001% to 0.2%.

4. The copper-plated austenitic stainless steel coil of claim 1,
wherein, in a 100 × 100 mm² area of a surface, an area ratio of the copper plating layer is 95% or more.

5. The copper-plated austenitic stainless steel coil of claim 1,
wherein the copper plating layer comprises 75 wt% or more of copper.

6. The copper-plated austenitic stainless steel coil of claim 1,
further comprising a nickel plating layer between the austenitic stainless steel coil base material and the copper plating layer.

7. A method for manufacturing a copper-plated austenitic stainless steel coil, the method comprising: providing an austenitic stainless steel coil base material; and
electroplating copper by immersing the base material in a solution comprising 10 g/L to 500 g/L of CuSO₄·5H₂O, 10 g/L to 500 g/L of H₂SO₄, and a balance of water, and applying a current density from 1 A/dm² to 50 A/dm² for 1 to 150 seconds.

8. The method of claim 7,
wherein the austenitic stainless steel coil base material satisfies a film index of 1.2 or less, the film index being represented by (Si+2Al)/Mn,
(wherein Si, Al, and Mn represent a content in weight percent of each respective element.)

9. The method of claim 7,
wherein a composition of the austenitic stainless steel coil base material comprises, wt%: C: 0.005% to 0.080%, Si: 0.1% to 1.0%, Mn: 0.1% to 1.5%, Cu: 0.05% to 0.5%, Ni: 8% to 13%, Cr: 16% to 20%, Mo: 0.05% to 2.5%, and Al: 0.001% to 0.2%.

10. The method of claim 7,
further comprising, prior to the electroplating of copper, immersing the base material for 1 to 120 seconds in: (a) a sulfuric acid solution at a concentration of 5 g/L to 200 g/L; or (b) a mixed acid solution comprising 5 g/L to 200 g/L of nitric acid and 1 g/L to 20 g/L of hydrofluoric acid.
